# EUROPEAN PATENT SPECIFICATION

(11) **EP 1 437 738 B1**
(45) Date of publication and mention of the grant of the patent: **07.11.2018**
(21) Application number: 03300170.2
(22) Date of filing: 20.10.2003
(51) Int. Cl.: G11B 27/10, G11B 27/34, G06F 17/30, G10H 1/00

(54) **Method for creating and accessing a menu for audio content without using a display**
Verfahren zum Herstellen von und zum Zugriff auf ein Menü für Audiodaten, ohne Verwendung eines Bildschirms
Procédé pour la création de et l'accès à un menu de contenu audio, sans utilisation d'un écran

(30) Priority: 06.01.2003 EP 03290019
(43) Date of publication of application: 14.07.2004
(73) Proprietor: Thomson Licensing, 92130 Issy-les-Moulineaux (FR)
(72) Inventor: Tazine, Nour-Eddine, 35530 Noyal sur Vilaine (FR); Vigouroux, Jean-Ronan, 35700 Rennes (FR); Grasland, Izabela, 35580 Guichen (FR)
(74) Representative: Vidon Brevets & Stratégie

(56) References cited:
- DE-A- 19 608 514
- FR-A- 2 602 352
- JP-A- 2002 074 911
- PAMPALK, E. ET AL: "Content-based Organization and Visualization of Music Archives" PROCEEDINGS OF THE 10TH ACM INTERNATIONAL CONFERENCE ON MULTIMEDIA, 1 December 2002 (2002-12-01), - 6 December 2002 (2002-12-06) pages 570-579, XP002247539 Juan-les-Pins, France
- PYE D: "Content-based methods for the management of digital music" PROCEEDINGS OF 2000 INTERNATIONAL CONFERENCE ON ACOUSTICS, SPEECH AND SIGNAL PROCESSING, vol. 6, 5 June 2000 (2000-06-05), - 9 June 2000 (2000-06-09) pages 2437-2440, XP010504797 Istanbul, Turkey
- RAUBER, A. ET AL: "Automatically Analyzing and Organizing Music Archives" 5TH EUROPEAN CONFERENCE ON RESEARCH AND ADVANCED TECHNOLOGY FOR DIGITAL LIBRARIES (ECDL 2001), 4 September 2001 (2001-09-04), - 8 September 2001 (2001-09-08) pages 402-414, XP002247540 Darmstadt, Germany
- "Partitioning Around Medoids (Program PAM)" In: KAUFMAN L ET AL: "Finding Groups in Data: An Introduction to Cluster Analysis", 1 January 1990 (1990-01-01), John-Wiley and Sons, XP007921092, ISBN: 0-471-73578-7 pages 68-125,

## Description

This invention relates to an audio management system that allows a user to browse through stored audio files in a very natural way. The invention concerns large-capacity digital storage-playback systems for audio content like MPEG audio layer 3 (MP3) players.

### Background

Driven by the recent advances in the technologies of digital storage and audio compression, the problem of managing very big collections of audio files becomes predominant. For instance, the current generation of MP3 players contains a 10 GB hard disk drive which enables users to store e.g. more than 300 hours of MP3PRO music, meaning more than 4.000 titles.

Reliable tools are required to make those collections accessible to the users.

The classical way of indexing audio files is based on textual meta-information like title, artist, album or genre, like e.g. ID3 tags for MP3 audio files.
There are some drawbacks with this kind of organization:
1. The metadata are textual and not audio, and therefore cannot give a precise representation of an audio content, like a representative extract of the content can do.
2. Organization sorted by genre or by artist allows users to locate a particular piece of music. This presupposes that users have well-defined goals, knowing exactly what they want to hear. The users searching strategy must be goal-driven and deterministic.
3. There are a lot of genres: for instance, the music archive mp3.com currently lists its titles under 180 different sub-genres, organized in 16 main genres. It is difficult for a user to navigate in such organization.
4. Genres are sometimes subjective because they are established a priori and not deduced from the content itself. Sometimes they are difficult to interpret.
5. A classification by genres is not able to satisfy very simple user needs like for instance "This piece of music is relaxing me. I would like to hear more like this".
The present invention is directed to overcoming these drawbacks.

Document DE19608514 describes creating a table of contents for a CD which includes an audio extract of each piece of music.

Document PAMPALK, E. ET AL: "Content-based Organization and Visualization of Music Archives" PROCEEDINGS OF THE 10TH ACM INTERNATIONAL CONFERENCE ON MULTIMEDIA, 1 December 2002, describes classifying audio tracks in a large music archive into clusters based on parameters of the audio tracks.

### Invention

The present invention deals with a process and system for navigating through a large amount of audio files, e.g. MP3 files, using brief representatives of the audio content. Before a user selects a music track, he can benefit from hearing a brief representative excerpt, in the following referred to as "audio thumbnail". An audio thumbnail is of sufficient length to recognize the music, e.g. 5 or 6 seconds. The stored audio files are preprocessed in order to extract some relevant and objective descriptors. According to the invention, these descriptors are used to cluster the music tracks into perceptually homogeneous groups. From each cluster a relevant track is selected automatically or manually, or semi-automatically, and from said selected track an audio thumbnail is extracted. Then these audio thumbnails being key phrases are arranged in a tree data structure, or table of contents, that enables the user to navigate without any visual navigation means, like display.

Furthermore, the audio thumbnails allow the user to navigate perceptually through the audio database, without having to remember textual elements, like title or artist names. It is particularly suited to enable users without precise idea of what they want to hear to browse their database, and to select perceptually from clusters of songs. Perceptually means here that the thumbnails address to the perception, and not memory, of users. Also, said clusters are perceptive, meaning that the structuring of the clusters is relevant for users, and thus said structuring meets real user needs.

Using this invention, users can create play lists beyond the classical music categories like pop or country.

### Brief description of the drawings

Exemplary embodiments of the invention are described with reference to the accompanying drawings, which show in
Fig.1 an exemplary architecture of an audio reproduction system using an audio menu;
Fig.2 an exemplary user interface without display.

### Detailed description of the invention

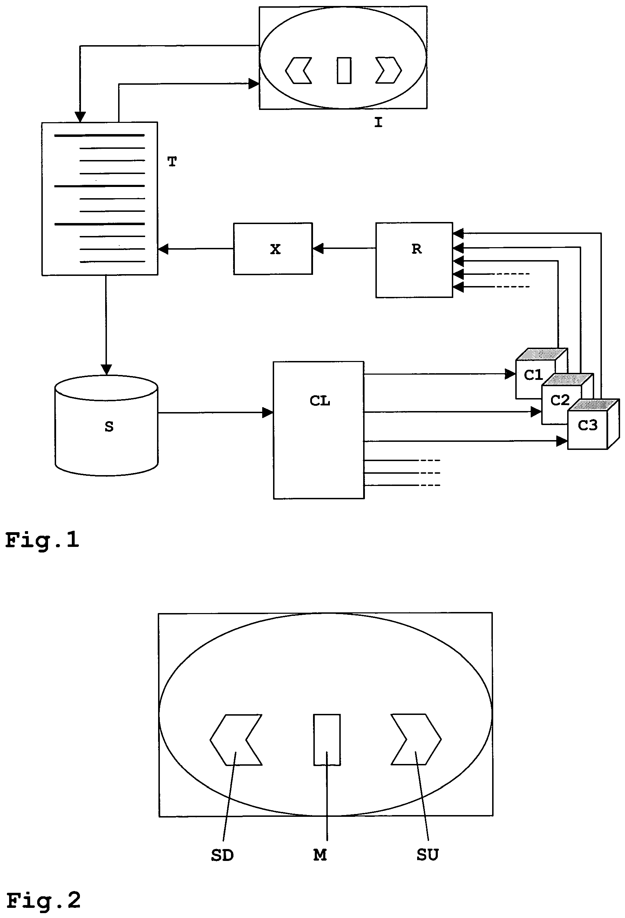

The present invention describes a method for creating, organizing and using audio representations for audio content. The structure of the invention is shown in Figure 1. Audio tracks, usually music, are stored in a storage means S. The tracks are classified in a classifier CL and associated to a cluster of tracks C1,C2,C3. For each cluster a representative example is selected in a representative selector R. Further, an extractor X extracts a characteristic sample, or thumbnail, from said example, and the thumbnail is associated to a table of contents T. The user uses an interface I to select a first cluster represented by a first thumbnail, listen to the selected thumbnail, and decide whether to select another cluster, or select said first cluster related to said first thumbnail and then select a track belonging to said cluster, which track is then read from the storage means S and reproduced.

Advantageously, this approach is more perception based than previous methods, and therefore more convenient to the user. An audio-based indexing system according to the invention combines two methods that are known from other content search systems, namely the 'table-of-contents' method and the 'radio-like navigation' method.

The 'table-of-contents' method relates to a books table of contents, where short representative sequences summing up the actual text are grouped according to the structure of the books contents. This usually correlates with a logical classification into topics. Using this method for audio content means extracting parameters, or descriptors, from the audio file, following objective criteria defined below, and then group together homogeneous tracks in clusters. From a user's point of view, these clusters make sense because their content-based nature is going farther than the a priori classification in genres. E.g. all the fragments of guitar music, coming from all genres, may be grouped together in a cluster. All the relaxing music can constitute another cluster. According to the invention, the different clusters constitute the "table of contents" of the database. And, like in a book's table of contents, there may be different levels of details, like e.g. chapter 1, chapter 1.1, etc. Like the reader can navigate from chapter to chapter, and may decide to read a chapter more in detail, the listener can navigate from cluster to cluster, or may decide to listen to more, similar music from a cluster.

The 'radio-like navigation' method relates to typical user behavior when listening to the radio. Content browsing in this context is e.g. the user scanning the FM band on a car radio, and listening to a track or switching to the next station. The invention uses this concept, with a radio station corresponding to a cluster of tracks. Then 'switch to another station' corresponds to 'select another cluster', and 'listen to a track' corresponds to 'listen to this track or to a similar track from the same cluster'.

In the following, the afore mentioned steps in creating and organizing audio representations are described in detail, the steps being performed when a track is newly added to the database, or when the database is reorganized.

In a first step descriptors are extracted from the audio track. Three types of descriptors are used, trying to be objective and still relevant for the user.

The first type of descriptors is low-level descriptors, or physical features, as being typical for signal processing methods. Examples are spectral centroid, short-time energy or short-time average zero-crossing.

The second type of descriptors is medium-level descriptors, or perceptual features, as being typically used by a musician. Examples are rhythm, e.g. binary or ternary rhythm, tonality, the kind of formation, e.g. voice or special instruments.

The third type of descriptors is high-level descriptors, or psychological and social features of the track, as being normal for the average user. Trying to minimize the subjective nature of these features, it is e.g. possible to classify music as being happy or anxious, calm or energetic. These characteristics can be assigned to a certain degree, or with a certain probability, to a piece of music, when e.g. descriptors of the previously described types are used. Also, a song can be highly memorable, can convey a certain mood or emotion, can remind the user of something, etc. This may be done automatically using supervised algorithms, i.e. with algorithms that require user interaction.

The second step consists of clustering the music tracks. Using the descriptors defined in the first step, the tracks can be classified into homogeneous classes. These classes are more valuable to a user than classifying music by artist or title. Unsupervised algorithms may be used to cluster the tracks into packets with similar properties. Examples of such algorithms are the K-means or Self Organizing Maps. A new cluster may be automatically generated when the dissimilarity of a newly added track, compared to existing clusters, reaches a certain minimum level, and in that case the newly added track will be associated with the new cluster.

At this point, the tracks are classified and therefore it is possible to create a table of contents. There is no sharp classification required, e.g. it is possible to have the same track in any number of clusters. For example, one cluster may be for guitar music, while another cluster may be for calm music, and a track matching both characteristics may be associated with both clusters. In this case, both clusters may contain a link to said audio track, but the track itself needs to be stored only once.

The third step consists of automatically selecting a representative track for each cluster. Advantageously, the most representative track for a cluster is selected, using classical medoid selection. A medoid is that object of a cluster whose average dissimilarity to all objects of the cluster is minimal. Said dissimilarity can e.g. be determined using the descriptors that were extracted during the first step.

In the fourth step an audio thumbnail is created and stored for the medoid track. In another embodiment of the invention an audio thumbnail may be created and stored also for other tracks. For thumbnail creation it is evaluated which criteria are the best to characterize an audio track by a short audio sequence, the audio sequence being long enough to recognize the track, e.g. 5 or 6 seconds. In one embodiment of the invention the length of thumbnails is constant, in a second embodiment the length of thumbnails can be modified, and in a third embodiment the length of thumbnails can vary from track to track, according to the tracks descriptors. Further, in one embodiment of the invention a thumbnail is an original sample from the track, or in another embodiment it is automatically synthesized from said track.

In the fifth step the audio thumbnails are listed in a virtual table, which can be scanned through by the user, like scanning through different radio stations. The table may be organized such that within a cluster the most relevant track, or medoid, will be found first when scanning through the table. Other tracks within a cluster may be sorted, e.g. according to relevance. Advantageously, no graphical or textual display is required for scanning through the table of contents. The structure of the table of contents may be as follows:

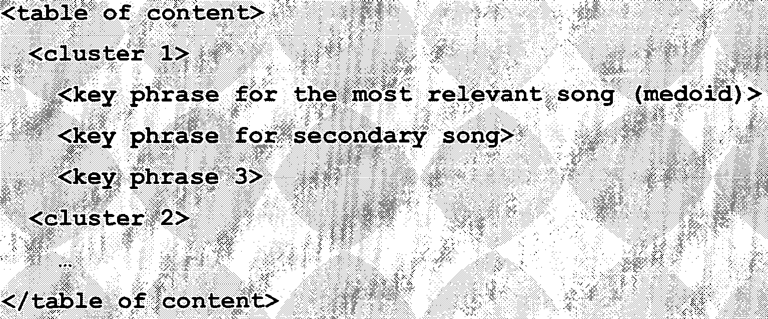

A user may decide to listen to the current track, or to another track belonging to the same cluster and therefore being similar to said current track. Alternatively the user may decide to listen to a track from another cluster. Advantageously, only one button, or other means of command input, is required to operate the navigation system, namely for 'Switch Cluster'. More comfortable to the user is a device with three buttons, as shown in Figure 2. One button SD is for 'Switch to a Near Cluster', one button SU is for 'Switch to a Distant Cluster', and one button M is for 'Switch to another track from the Current Cluster'. Alternatively, it is sufficient to have only one button, if the button has more than one function, or other means of user input. Other functions controlled by user input could be e.g. random track selection or random cluster selection mode. Another function could be to successively reproduce the representatives of all clusters until the user selects one cluster, said function being advantageous because the user needs not manually scan through the table of contents.

Further embodiments are described in the following.

In one embodiment of the invention an audio track belongs to only one cluster, while in another embodiment an audio track may belong to more than one cluster, when the respective class criteria are not excluding each other.

In one embodiment of the invention the table of contents has only one level of clustering, like in the previously described example, while in another embodiment the table of contents can have more hierarchical levels of clusters.

In one embodiment of the invention the classification rules for audio tracks are final, while in another embodiment said rules may be modified. Said modification may happen either by an update, e.g. via internet, or by any form of user interaction, e.g. upload to PC, edit and download from PC, or by statistical or self learning methods as used e.g. by artificial intelligence. This may be implemented such that an automatic or semi-automatic reclassification with modified or enhanced rules may be performed when e.g. the number of tracks associated with one cluster is much higher than the number of tracks associated with any other cluster.

In one embodiment of the invention thumbnails may be created only for tracks representing a cluster. In another embodiment of the invention thumbnails may be created also for other tracks, e.g. tracks that fulfill a certain condition like being selected very often or very rarely, or being very long. In a third embodiment thumbnails are created for all tracks.

In one embodiment of the invention the tracks within a cluster may have a constant order, so that the user can learn after a while when a certain track comes. The order can follow the tracks relevance, or any other parameter, e.g. storage time, or frequency of selection. In another embodiment of the invention the tracks within a cluster may be unordered, or appear randomly when the user selects a cluster.

In one embodiment of the invention there is a representative track selected for each cluster, while in another embodiment it may be useful to have no representative track for one of said clusters, e.g. a cluster for favorites or a cluster for tracks not being classifiable by the employed methods.

Advantageously the described method for perception based classification and retrieval of audio contents can be used in devices, preferably portable devices, for storage and reproduction of music or other audio data, e.g. MP3 players.

## Claims

1. A method for creating a menu for audio content stored in a storage means (S), the content consisting of audio tracks, and the menu containing reproducible audio extracts of said audio tracks, the method comprising the steps of
- classifying (CL) the audio tracks into clusters (C1,...,C3), wherein said classification is performed according to characteristic parameters of said audio tracks;
- for each cluster, selecting one audio track as a representative track;
- extracting a reproducible audio extract from each representative track;
- associating the reproducible audio extracts as representatives of said clusters to a table of contents in the menu (T);
- detecting addition of a new audio track to the storage means;
- determining characteristic parameters of the new audio track;
- automatically generating a second cluster when a detected dissimilarity of the new added audio track, compared to the existing clusters, reaches a certain minimum level, and classifying the new added audio track into the second cluster;
- selecting from the second cluster automatically an audio track being a representative for the second cluster, wherein a medoid of the second cluster, according to said characteristic parameters, is selected;
- automatically generating a reproducible second audio extract from said audio track representative for the second cluster; and
- associating said reproducible second audio extract as representative of said second cluster tothe table of contents in the menu (T).

2. Method according to claim 1, wherein said characteristic parameters used for classification of audio content comprise one or more audio descriptors, the audio descriptors being either physical features, or perceptual features, or psychological or social features of the audio content.

3. Method according to any of claims 1-2, wherein an audio track can be classified into more than one cluster (C1,...,C3).

4. Method according to any of claims 1-3, wherein the audio tracks within a cluster (C1,...,C3) have variable order, so that the user listens to a randomly selected track when having selected a cluster (C1,...,C3), with said track belonging to said cluster.

5. Method according to any of claims 1-4, wherein audio data representing the audio content are clustered within said storage means (S) according to said menu.

6. Method according to any of claims 1-5, wherein audio extracts are created additionally for audio tracks not being representatives of clusters.

7. Method according to any of claims 1-6, wherein said menu is hierarchical, such that a cluster may contain one or more subclusters.

8. Method according to any of claims 1-7, wherein classification rules used in said classifying steps are modified automatically if a defined precondition is detected.

9. Method according to claim 8, wherein said precondition comprises that the difference between the number of tracks in a cluster and the number of tracks in another cluster reaches a maximum limit value.

10. Method according to claim 8, wherein said precondition comprises that all stored tracks were classified into one cluster and the total number of tracks reaches a maximum limit value.

11. An apparatus for creating a menu for audio content stored on a storage means, the content consisting of audio tracks, and the menu containing reproducible audio extracts of said audio tracks, the apparatus comprising
- means for automatically classifying the audio tracks into clusters, wherein said classification is performed according to characteristic parameters of said audio tracks, one audio track is selected for each cluster as a representative track, a reproducible audio extract is extracted from each representative track, and the reproducible audio extracts are associated as representatives of said clusters to a table of contents in the menu (T);
- means for detecting addition of a new audio track to the storage means;
- means for determining characteristic parameters of the new audio track, wherein the means for classifying automatically generates a second cluster when a detected dissimilarity of the new added audio track, compared to existing clusters, reaches a certain minimum level, and classifies the new added audio track into the second cluster;
- means for automatically selecting, according to said characteristic parameters, a medoid audio track of the second cluster as representative for the second cluster;
- means for automatically generating a reproducible second audio extract from said audio track representative for the second cluster; and
- means for associating said reproducible second audio extract as representative of said second cluster to the table of contents in the menu.

12. Apparatus according to claim 11, further comprising
- means for selecting and reproducing a first reproducible audio extract from a first cluster;
- means for a first user input, the input controlling whether the cluster associated with the currently selected audio extract is selected or not; and
- means for a second user input, the input controlling whether another cluster is selected or not.

## Patentansprüche

1. Verfahren zum Erstellen eines Menüs für Audioinhalt, der in einem Speichermittel (S) gespeichert ist, wobei der Inhalt aus Audiospuren besteht und das Menü reproduzierbare Audioextrakte der Audiospuren enthält, wobei das Verfahren die folgenden Schritte umfasst:
- Einordnen (CL) der Audiospuren in Cluster (C1,...,C3), wobei die Einordnung gemäß charakteristischen Parametern der Audiospuren durchgeführt wird;
- für jeden Cluster Auswählen einer Audiospur als eine repräsentative Spur;
- Extrahieren eines reproduzierbaren Audioextrakts aus jeder repräsentativen Spur;
- Assoziieren der reproduzierbaren Audioextrakte als Repräsentanten der Cluster mit einem Inhaltsverzeichnis in dem Menü (T);
- Erkennen einer Hinzufügung einer neuen Audiospur zu dem Speichermittel;
- Bestimmen von charakteristischen Parametern der neuen Audiospur;
- automatisches Erzeugen eines zweiten Clusters, wenn eine erkannte Unterschiedlichkeit der neuen hinzugefügten Audiospur im Vergleich zu den existierenden Clustern einen bestimmten Mindestgrad erreicht, und Einordnen der neuen hinzugefügten Audiospur in den zweiten Cluster;
- automatisches Auswählen einer Audiospur, die ein Repräsentant für den zweiten Cluster ist, aus dem zweiten Cluster, wobei ein Medoid des zweiten Clusters gemäß den charakteristischen Parametern ausgewählt wird;
- automatisches Erzeugen eines reproduzierbaren zweiten Audioextrakts aus der Audiospur, die für den zweiten Cluster repräsentativ ist; und
- Assoziieren des reproduzierbaren zweiten Audioextrakts als Repräsentant des zweiten Clusters mit dem Inhaltsverzeichnis in dem Menü (T).

2. Verfahren nach Anspruch 1, wobei die charakteristischen Parameter, die zur Einordnung von Audioinhalt verwendet werden, einen oder mehrere Audiodeskriptoren umfassen, wobei die Audiodeskriptoren entweder physikalische Merkmale oder Wahrnehmungsmerkmale oder psychologische oder soziale Merkmale des Audioinhalts sind.

3. Verfahren nach einem der Ansprüche 1-2, wobei eine Audiospur in mehr als einen Cluster (C1, ..., C3) eingeordnet werden kann.

4. Verfahren nach einem der Ansprüche 1-3, wobei die Audiospuren innerhalb eines Clusters (C1, ..., C3) eine variable Reihenfolge aufweisen, so dass der Benutzer sich eine zufällig ausgewählte Spur anhört, wenn er einen Cluster (C1, ..., C3) ausgewählt hat, wobei die Spur zu dem Cluster gehört.

5. Verfahren nach einem der Ansprüche 1-4, wobei Audiodaten, die den Audioinhalt repräsentieren, innerhalb des Speichermittels (S) gemäß dem Menü geclustert sind.

6. Verfahren nach einem der Ansprüche 1-5, wobei Audioextrakte zusätzlich für Audiospuren erzeugt werden, die nicht Repräsentanten von Clustern sind.

7. Verfahren nach einem der Ansprüche 1-6, wobei das Menü hierarchisch ist, so dass ein Cluster einen oder mehrere Untercluster enthalten kann.

8. Verfahren nach einem der Ansprüche 1-7, wobei Einordnungsregeln, die in den Einordnungsschritten verwendet werden, automatisch modifiziert werden, wenn eine definierte Vorbedingung erkannt wird.

9. Verfahren nach Anspruch 8, wobei die Vorbedingung umfasst, dass die Differenz zwischen der Anzahl von Spuren in einem Cluster und der Anzahl von Spuren in einem anderen Cluster einen maximalen Grenzwert erreicht.

10. Verfahren nach Anspruch 8, wobei die Vorbedingung umfasst, dass alle gespeicherten Spuren in einen Cluster eingeordnet wurden und die Gesamtanzahl von Spuren einen maximalen Grenzwert erreicht.

11. Vorrichtung zum Erstellen eines Menüs für Audioinhalt, der auf einem Speichermittel gespeichert ist, wobei der Inhalt aus Audiospuren besteht und das Menü reproduzierbare Audioextrakte der Audiospuren enthält, wobei die Vorrichtung Folgendes umfasst:
- Mittel zum automatischen Einordnen der Audiospuren in Cluster, wobei die Einordnung gemäß charakteristischen Parametern der Audiospuren durchgeführt wird, eine Audiospur für jeden Cluster als eine repräsentative Spur ausgewählt wird, ein reproduzierbarer Audioextrakt aus jeder repräsentativen Spur extrahiert wird und die reproduzierbaren Audioextrakte als Repräsentanten der Cluster mit einem Inhaltsverzeichnis in dem Menü (T) assoziiert werden;
- Mittel zum Erkennen einer Hinzufügung einer neuen Audiospur zu dem Speichermittel;
- Mittel zum Bestimmen von charakteristischen Parametern der neuen Audiospur,
wobei das Mittel zum Einordnen automatisch einen zweiten Cluster erzeugt, wenn eine erkannte Unterschiedlichkeit der neuen hinzugefügten Audiospur im Vergleich zu den existierenden Clustern einen bestimmten Mindestgrad erreicht, und die neue hinzugefügte Audiospur in den zweiten Cluster einordnet;
- Mittel zum automatischen Auswählen einer Medoid-Audiospur des zweiten Clusters als Repräsentant für den zweiten Cluster gemäß den charakteristischen Parametern;
- Mittel zum automatischen Erzeugen eines reproduzierbaren zweiten Audioextrakts aus der Audiospur, die für den zweiten Cluster repräsentativ ist; und
- Mittel zum Assoziieren des reproduzierbaren zweiten Audioextrakts als Repräsentant des zweiten Clusters mit dem Inhaltsverzeichnis in dem Menü.

12. Vorrichtung nach Anspruch 11, die weiterhin Folgendes umfasst:
- Mittel zum Auswählen und Reproduzieren eines ersten reproduzierbaren Audioextrakts aus einem ersten Cluster;
- Mittel für eine erste Benutzereingabe, wobei die Eingabe steuert, ob der Cluster, der mit dem aktuell ausgewählten Audioextrakt assoziiert ist, ausgewählt wird oder nicht; und
- Mittel für eine zweite Benutzereingabe, wobei die Eingabe steuert, ob ein anderer Cluster ausgewählt wird oder nicht.

## Revendications

1. Procédé pour créer un menu pour du contenu audio stocké dans un moyen de stockage (S), le contenu consistant en des pistes audio, et le menu contenant des extraits audio reproductibles desdites pistes audio, le procédé comprenant les étapes suivantes :
- classification (CL) des pistes audio dans des groupes (C1,...,C3), où ladite classification est effectuée en fonction de paramètres caractéristiques desdites pistes audio ;
- pour chaque groupe, sélection d'une piste audio comme piste représentative ;
- extraction d'un extrait audio reproductible de chaque piste représentative ;
- association des extraits audio reproductibles représentatifs desdits groupes à un sommaire dans le menu (T) ;
- détection de l'ajout d'une nouvelle piste audio au moyen de stockage ;
- détermination de paramètres caractéristiques de la nouvelle piste audio ;
- génération automatique d'un deuxième groupe lorsqu'une dissimilarité détectée de la nouvelle piste audio ajoutée, par rapport aux groupes existants, atteint un niveau minimum donné, et classification de la nouvelle piste audio ajoutée dans le deuxième groupe ;
- sélection automatique dans le deuxième groupe d'une piste audio comme représentative pour le deuxième groupe, où un médoïde du deuxième groupe, en fonction desdits paramètres caractéristiques, est sélectionné ;
- génération automatique d'un deuxième extrait audio reproductible à partir de ladite piste audio représentative pour le deuxième groupe ; et
- association dudit deuxième extrait audio reproductible représentatif dudit deuxième groupe au sommaire dans le menu (T).

2. Procédé selon la revendication 1, dans lequel lesdits paramètres caractéristiques utilisés pour la classification de contenu audio comprennent un ou plusieurs descripteurs audio, les descripteurs audio étant des caractéristiques physiques, des caractéristiques perceptuelles ou des caractéristiques psychologiques ou sociales du contenu audio.

3. Procédé selon l'une quelconque des revendications 1 à 2, dans lequel une piste audio peut être classifiée dans plusieurs groupes (C1,...,C3).

4. Procédé selon l'une quelconque des revendications 1 à 3, dans lequel les pistes audio d'un groupe (C1,...,C3) présentent un ordre variable, si bien que l'utilisateur écoute une piste sélectionnée de façon aléatoire après avoir sélectionné un groupe (C1,...,C3), ladite piste appartenant audit groupe.

5. Procédé selon l'une quelconque des revendications 1 à 4, dans lequel des données audio représentant le contenu audio sont regroupées dans ledit moyen de stockage (S) en fonction dudit menu.

6. Procédé selon l'une quelconque des revendications 1 à 5, dans lequel des extraits audio sont en outre créés pour des pistes audio non représentatives des groupes.

7. Procédé selon l'une quelconque des revendications 1 à 6, dans lequel ledit menu est hiérarchique, si bien qu'un groupe peut contenir un ou plusieurs sous-groupes.

8. Procédé selon l'une quelconque des revendications 1 à 7, dans lequel des règles de classification utilisées dans lesdites étapes de classification sont modifiées automatiquement si une précondition définie est détectée.

9. Procédé selon la revendication 8, dans lequel ladite précondition inclut que la différence entre le nombre de pistes d'un groupe et le nombre de pistes d'un autre groupe atteigne une valeur limite maximum.

10. Procédé selon la revendication 8, dans lequel ladite précondition inclut que toutes les pistes stockées aient été classifiées dans un groupe et que le nombre total de pistes atteigne une valeur limite maximum.

11. Appareil pour créer un menu pour du contenu audio stocké sur un moyen de stockage, le contenu consistant en des pistes audio, et le menu contenant des extraits audio reproductibles desdites pistes audio, l'appareil comprenant :
- un moyen pour classifier automatiquement les pistes audio dans des groupes, où ladite classification est effectuée en fonction de paramètres caractéristiques desdites pistes audio, une piste audio est sélectionnée pour chaque groupe comme piste représentative, un extrait audio reproductible est extrait de chaque piste représentative, et les extraits audio reproductibles sont associés comme représentatifs desdits groupes à un sommaire dans le menu (T) ;
- un moyen pour détecter l'ajout d'une nouvelle piste audio au moyen de stockage ;
- un moyen pour déterminer des paramètres caractéristiques de la nouvelle piste audio ;
où le moyen de classification génère automatiquement un deuxième groupe lorsqu'une dissimilarité détectée de la nouvelle piste audio ajoutée, par rapport aux groupes existants, atteint un niveau minimum donné, et classifie la nouvelle piste audio ajoutée dans le deuxième groupe ;
- un moyen pour sélectionner automatiquement, en fonction desdits paramètres caractéristiques, une piste audio médoïde du deuxième groupe comme représentative pour le deuxième groupe ;
- un moyen pour générer automatiquement un deuxième extrait audio reproductible à partir de ladite piste audio représentative pour le deuxième groupe ; et
- un moyen pour associer ledit deuxième nouvel extrait audio reproductible comme représentatif dudit deuxième groupe au sommaire dans le menu (T).

12. Appareil selon la revendication 11, comprenant également :
- un moyen pour sélectionner et reproduire un premier extrait audio reproductible d'un premier groupe ;
- un moyen permettant une première entrée utilisateur, l'entrée déterminant si le groupe associé à l'extrait audio actuellement sélectionné est sélectionné ou non ; et
- un moyen permettant une deuxième entrée utilisateur, l'entrée déterminant si un autre groupe est sélectionné ou non.
